# EUROPÄISCHE PATENTSCHRIFT

(11) **EP 3 186 212 B1**
(45) Veröffentlichungstag und Bekanntmachung des Hinweises auf die Patenterteilung: **27.05.2020**
(21) Anmeldenummer: 15759422.7
(22) Anmeldetag: 19.08.2015
(51) Int. Cl.: C05F 7/00, C02F 3/04

(54) **ANLAGE ZUR DÜNGEMITTELHERSTELLUNG AUS ORGANISCHEN ABFÄLLEN SOWIE VERFAHREN ZUR DÜNGEMITTELHERSTELLUNG AUS ORGANISCHEN ABFÄLLEN**
SYSTEM FOR PRODUCING FERTILIZING AGENT FROM ORGANIC WASTES AND METHOD FOR PRODUCING FERTILIZING AGENT FROM ORGANIC WASTES
INSTALLATION DE PRODUCTION D'ENGRAIS À PARTIR DE DÉCHETS ORGANIQUES ET PROCÉDÉ DE PRODUCTION D'ENGRAIS À PARTIR DE DÉCHETS ORGANIQUES

(30) Priorität: 26.08.2014 DE 102014216922
(43) Veröffentlichungstag der Anmeldung: 05.07.2017
(73) Patentinhaber: Deutsches Zentrum für Luft- und Raumfahrt e.V., 51147 Köln (DE)
(72) Erfinder: HAUSLAGE, Jens, 53919 Weilerswist (DE)
(74) Vertreter: dompatent von Kreisler Selting Werner - Partnerschaft von Patent- und Rechtsanwälten mbB
(86) Internationale Anmeldenummer: PCT/EP2015/069083
(87) Internationale Veröffentlichungsnummer: WO 2016/030256

(56) Entgegenhaltungen:
- EP-A1- 2 206 683
- EP-A2- 2 518 025
- WO-A1-2010/108226
- US-A1- 2012 234 752
- VAN DEN AKKER B ET AL: "Application of high rate nitrifying trickling filters for potable water treatment", WATER RESEARCH, ELSEVIER, AMSTERDAM, NL, Bd. 42, Nr. 17, 1. November 2008 (2008-11-01), Seiten 4514-4524, XP025533118, ISSN: 0043-1354, DOI: 10.1016/J.WATRES.2008.07.038 [gefunden am 2008-08-09]

## Beschreibung

Die vorliegende Erfindung betrifft eine Anlage zur Düngemittelherstellung aus organischen Abfällen sowie ein Verfahren zur Düngemittelherstellung aus organischen Abfällen.

Organische Abfälle, wie Küchenabfälle oder Gartenabfälle oder auch Ausscheidungen des menschlichen oder tierischen Körpers werden zumeist dem normalen Müll oder Abwasserkreislauf zugegeben und somit ungenutzt entsorgt.

Häufig werden dabei die organischen Abfälle dem Restmüll zugegeben, wobei der dadurch erzeugte nasse Müll ein Problem für die Entsorgungsunternehmen darstellt, da bei der Müllverbrennung hochwertiger Verbundmüll zugeführt werden muss, um den Verbrennungsvorgang aufrecht zu erhalten.

Eine andere Möglichkeit des Abbaus von organischen Abfällen liegt in der Kompostierung oder der Nutzung der organischen Abfälle in Biomassekraftwerken. Letztere werden zwar gesetzlich gefördert, jedoch erhalten insbesondere kleinere Anlagen eine höhere Förderung. Auch ist die Verwertung von organischen Abfallstoffen nicht an dem jeden Standort ideal, da häufig andere Kraftwerksarten, wie beispielsweise solare Kraftwerke oder Windkraftwerke, eine höhere Effizienz aufweisen können. Biomassekraftwerke sind daher nur bedingt für die Verwertung von organischen Abfällen einsetzbar.

Es ist daher die Aufgabe der vorliegenden Erfindung, eine Anlage und ein Verfahren zu schaffen, mit dem eine Verwertung von organischen Abfällen auf eine alternative Methode möglich ist. Die Erfindung ist definiert durch die Merkmale des Anspruchs 1, 10 bzw. 15.

EP 2 518 025 A2 und WO 2010/108226 A1 offenbaren Systeme zur Verstoffwechslung von organischen Stoffen. US 2012/234752 A1 beschreibt eine Anlage mit einem Tröpfkörper enthaltend eine Säule in der poröses Material angeordnet ist.

Die erfindungsgemäße Anlage zur Düngemittelherstellung aus organischen Abfällen weist mindestens eine Säule mit einem langgestreckten Innenraum auf, wobei der langgestreckte Innenraum an einem oberen Endbereich mindestens eine Einlassöffnung zum Einlass einer Suspension aus einer Flüssigkeit und organischen Abfällen und an einem unteren Ende mindestens eine Auslassöffnung für die Suspension aufweist. In dem langgestreckten Raum ist poröses Füllmaterial angeordnet.

Die Anlage weist ferner ein Becken zur Aufnahme der Suspension auf. Das Becken steht mit der Einlassöffnung und der Auslassöffnung des Innenraums in Verbindung, so dass die Suspension von dem Becken im Kreislauf durch die Einlassöffnung in den Innenraum befördert werden kann und aus der Auslassöffnung zurück in das Becken gelangt. Das Becken weist einen Einfüllbereich auf, in dem die Suspension bereitstellbar und insbesondere herstellbar ist. Der Hauptbereich des Beckens weist eine Auslasseinrichtung zur Entnahme des fertiggestellten Düngemittels auf.

Mit der erfindungsgemäßen Anlage ist eine sinnvolle Verwertung von organischen Abfällen in besonders vorteilhafter Weise möglich, da diese mittels der erfindungsgemäßen Anlage in Nitrate umgewandelt werden, die zur Herstellung eines Düngemittels in Form einer Düngemittellösung genutzt werden können. Durch das Anordnen von porösem Füllmaterial in dem langgestreckten Innenraum entsteht aufgrund der Porosität des Füllmaterials eine große Oberfläche. An dieser Oberfläche siedeln sich Mikroorganismen an, die eine Umwandlung von organischen Bestandteilen der organischen Abfälle in Nitrate vornehmen. Aufgrund der großen Oberfläche kann Sauerstoff, z.B. aus der Luft, in ausreichendem Umfang an die Mikroorganismen gelangen, so dass ein im Wesentlichen aerober Abbau der organischen Stoffe erfolgt. Bei der Umwandlung der organischen Stoffe entstehen somit keine wahrnehmbaren unangenehmen Gerüche.

Somit kann durch das Durchleiten der Suspension aus einer Flüssigkeit und organischen Abfällen durch das Füllmaterial in dem langgestreckten Innenraum der Säule den Mikroorganismen die in den organischen Abfällen enthaltenen organischen Bestandteile zugeführt werden.

Durch das Vorsehen eines Kreislaufs der Suspension von dem Becken durch den langgestreckten Innenraum der Säule zurück zu dem Becken werden nach und nach nahezu alle organischen Bestandteile der organischen Abfälle den Mikroorganismen zugeführt, so dass die organischen Abfällen zu einem großen Teil abgebaut werden. Ferner werden von der Flüssigkeit der Suspension die von den Mikroorganismen erzeugten Nitrate aufgenommen gelangen in das Becken.

Durch das Vorsehen eines Einfüllbereichs des Beckens, in dem die Suspension herstellbar ist, kann die Suspension beispielsweise in vorteilhafter Weise hergestellt werden, ohne den übrigen Betrieb der Anlage zu beeinflussen. Auch kann die Zugabe von organischen Abfällen in das Becken in vorteilhafter Weise gesteuert werden.

Die erfindungsgemäße Anlage kann beispielsweise für den Ammoniakabbau in der chemischen Industrie, für die Abfallbeseitigung von Kommunen oder für organische Abfälle aus dem Landwirtschafts- und Pflanzenbau eingesetzt werden.

Unter oberen Endbereich des Innenraums bzw. der Säule werden in Längsrichtung der Säule die oberen 10 % der Säule bzw. des Innenraums verstanden. Unter unteren Endbereich des Innenraums bzw. der Säule werden in Längsrichtung der Säule die unteren 10 % des Innenraums bzw. der Säule verstanden.

Die Anlage kann kontinuierlich oder chargenweise betrieben werden. Beim chargenweisen Betrieb nehmen die Anteile an organischen Abfällen in der Suspension während des Betriebs in dem gesamten Becken kontinuierlich ab, wohingegen die Nitratkonzentration in der Suspension bzw. Flüssigkeit zunimmt. Nach einem hinreichend langen Betrieb kann somit eine Düngemittellösung in Form von in einer Flüssigkeit enthaltenem Nitrat entnommen werden.

Bei einem kontinuierlichen Betrieb stellen sich in einzelnen Bereichen des Beckens Gleichgewichte von Suspension aus Flüssigkeit mit organischen Abfällen und Flüssigkeit mit Nitrat bzw. Suspension aus Flüssigkeit mit Nitraten organischen Abfällen ein.

Für einen kontinuierlichen Betrieb ist der Einfüllbereich des Beckens, in dem die Suspension herstellbar ist, von besonderem Vorteil, da dieser mit einiger Entfernung von der Säule bzw. einem Entnahmebereich für das Düngemittel angeordnet sein kann, so dass bei der Entnahme des Düngemittels sichergestellt ist, dass der Flüssigkeitsanteil des Düngemittels den langgestreckten Innenraum der Säule hinreichend oft durchlaufen hat, so dass ausreichend organische Abfälle abgebaut sind und somit der Anteil der organischen Abfälle in der Düngemittellösung möglichst gering ist. Auch ist es möglich, die Anteile an organischen Abfällen bei der Entnahme herauszufiltern und dem Becken wieder zuzuführen.

In den Poren des Füllmaterials können ferner Mikroklimazonen entstehen, in dem ein anaerober Abbau jener Stoffe erfolgt, die über einen aeroben Abbau nicht abbaubar sind. Da der anaerobe Abbau in Mikroklimazonen erfolgt, entstehen nur geringe Mengen von als unangenehmen Geruch empfundenen Gasen, die insgesamt für die Umgebung nicht wahrnehmbar sind und darüber hinaus in der Flüssigkeit der Suspension gebunden werden können. Dadurch kann die Anlage zur Düngemittelherstellung auch in der Nähe von Städten oder bewohnten Gebieten betrieben werden.

Bei dem Abbau bzw. der Umwandlung der organischen Bestandteile der organischen Abfälle entstehen über die Nitrifikation von Mikroorganismen Nitrate, die die Basis des Düngemittels darstellen. Somit werden die organischen Abfälle in vorteilhafter Weise in nutzbare Düngemittel umgewandelt, so dass in vorteilhafter Weise ein nutzbarer Stoff aus den organischen Abfällen gewonnen werden kann.

Vorzugsweise ist vorgesehen, dass der Einführbereich von einem Hauptbereich des Beckens über eine Siebvorrichtung getrennt ist, wobei der Hauptbereich des Beckens mit der Einlassöffnung der Auslassöffnung der Säule in Verbindung steht. Es wird somit erreicht, dass der Hauptbereich des Beckens, dem während des Kreislaufs der Suspension die Suspension entnommen wird und dem die Suspension wieder zugeführt wird, durch eine Siebvorrichtung von dem Bereich getrennt ist, in dem die Suspension bereitgestellt wird. Durch die Siebvorrichtung kann somit eine mechanische Trennung zwischen dem Einführbereich in dem Hauptbereich geschaffen werden, so dass ein Teil der organischen Abfälle der Suspension an dem Sieb zurückgehalten werden kann und somit die Konzentration von organischen Abfällen der Suspension in dem Hauptbereich des Beckens reguliert werden kann. Ferner werden durch die Siebvorrichtung große Teile, beispielweise nicht zerkleinerter organischer Abfall oder andere in den Einfüllbereich gelangte Teile, zurückgehalten und können somit nicht dem den Abbauprozess vornehmenden Teil der Anlage behindern.

Vorzugsweise ist vorgesehen, dass der Einfüllbereich den Hauptbereich umschließt. Mit anderen Worten: Der gesamte Randbereich des Beckens bildet den Einfüllbereich, wobei eine umlaufende Siebvorrichtung zwischen dem Einfüllbereich und dem Hauptbereich angeordnet ist. Vorzugsweise ist das Becken rund angeordnet, so dass der Einfüllbereich den Hauptbereich kreisringförmig umschließt.

Eine derartige Anordnung hat sich als besonders vorteilhaft herausgestellt, da dem Einfüllbereich von verschiedenen Seiten die organischen Abfälle zur Herstellung der Suspension zugegeben werden können. Ferner kann die Suspension von dem Einfüllbereich in den Hauptbereich strömen, wodurch im Inneren des Hauptbereichs ein Bereich entsteht, der weitestgehend einen gleichmäßigen Abstand zu dem Einfüllbereich aufweist. Dadurch kann erreicht werden, dass in einem mittigen Bereich des Hauptbereichs eine hohe Konzentration an Nitraten und eine geringe Konzentration an organischen Abfallstoffen vorliegt.

Vorzugsweise kann vorgesehen sein, dass in dem Einfüllbereich eine Kreisströmung erzeugbar ist. Dadurch wird die Suspension in diesem Bereich umgewälzt und es entsteht eine gleichmäßige Konzentration der Suspension. Ferner kann erreicht werden, dass lediglich in einem Bereich des Einführbereichs organische Abfälle zugeführt werden und die Kreisströmung durch Mischung der Suspension erfolgt. Dadurch wird erreicht, dass die in den Hauptbereich von allen Seiten einfließende Suspension weitestgehend die gleiche Konzentration an organischen Abfällen aufweist.

In einem bevorzugten Ausführungsbeispiel der Erfindung ist vorgesehen, dass die Auslassöffnung der Säule oberhalb des Spiegels der Suspension angeordnet ist. Mit anderen Worten: Die Auslassöffnung ist nicht in die Suspension eingetaucht, sondern es kann Luft an die Suspension gelangen. Dadurch werden im Bereich der Auslassöffnung anaerobe Zonen vermieden.

Die Erfindung sieht in vorteilhafter Weise vor, dass der Hauptbereich des Beckens eine Auslasseinrichtung zur Entnahme des fertiggestellten Düngemittels aufweist. Dadurch kann in vorteilhafter Weise ein kontinuierlicher Betrieb der Anlage ermöglicht werden, indem kontinuierlich durch die Auslasseinrichtung das fertiggestellte Düngemittel entnommen wird.

Die Auslasseinrichtung ist vorzugsweise mittig in dem Hauptbecken angeordnet. Dies ist besonders von Vorteil, wenn der Einfüllbereich den Hauptbereich einschließt, da in dem mittigen Bereich des Hauptbereichs dann die Flüssigkeit den höchsten Nitratanteil und den geringsten Anteil an organischen Abfällen aufweist.

Die Auslasseinrichtung kann ferner eine Filtervorrichtung aufweisen, die in der Flüssigkeit verbliebene organische Abfälle herausfiltert.

In einem besonders bevorzugten Ausführungsbeispiel der erfindungsgemäßen Anlage ist vorgesehen, dass diese mehrere Säulen aufweist, wobei alle Säulen in einem gleichmäßigen Abstand zu der Siebvorrichtung angeordnet sind. Dadurch wird gewährleistet, dass ein weitestgehend gleichmäßiger Abbau des organischen Abfalls erfolgt, da die den Säulen zugeführte Suspension annähernd die gleiche Konzentration von organischen Abfällen aufweist. Dadurch ist der Abbau von organischen Abfällen in vorteilhafter Weise steuerbar.

Dabei ist vorzugsweise vorgesehen, dass die Auslasseinrichtung im gleichen Abstand zu allen Säulen angeordnet ist. Beispielsweise kann vorgesehen sein, dass die Säulen auf einem virtuellen Kreis angeordnet sind und die Auslasseinrichtung mittig zwischen den Säulen angeordnet ist.

Dies ermöglicht, dass das durch die Auslasseinrichtung entnommene Düngemittel eine möglichst gleichmäßige Konzentration an Nitraten aufweist.

Das poröse Füllmaterial kann mineralisch sein. Insbesondere kann vorgesehen sein, dass das poröse Füllmaterial Vulkangestein und/oder ein Tonmineral ist. Ferner ist vorzugsweise vorgesehen, dass das Füllmaterial Schüttgut ist.

Durch das Vorsehen von mineralischem porösem Füllmaterial kann eine Pufferung und Regulierung des pH-Wertes in dem System erfolgen.

Vulkangestein und/oder Tonminerale sind kostengünstig erhältlich und weisen darüber hinaus eine große Oberfläche auf, die das Ansiedeln der Mikroorganismen in besonders vorteilhafter Weise ermöglicht. Durch das Vorsehen von Füllmaterial in Form von Schüttgut ist darüber hinaus eine besonders große Oberfläche bereitstellbar, wobei ferner ein Austausch des Füllmaterials in vorteilhafter Weise gewährleistet ist.

Es kann vorgesehen sein, dass das poröse Füllmaterial eine Porosität zwischen 35 % und 85 % besitzt. Unter Porosität wird das Verhältnis von Hohlraumvolumen zu Gesamtvolumen verstanden. An jeder Säule kann eine Flüssigkeitsleitung an der Einlassöffnung angeschlossen sein, die den Hauptbereich des Beckens mit der Einlassöffnung verbindet. Dabei kann eine Pumpe vorgesehen sein, die die Suspension durch die Flüssigkeitsleitung pumpt. Die Pumpe kann beispielsweise als Tauchpumpe ausgebildet sein. Für jede Säule kann eine separate Pumpe vorgesehen sein. Selbstverständlich ist es auch möglich, dass eine zentrale Pumpe mit den Flüssigkeitsleitungen mehrerer oder aller Säulen verbunden ist.

In einem Ausführungsbeispiel der Erfindung kann vorgesehen sein, dass jede Säule eine Fluidleitung aufweist, die in den unteren Endbereich des Innenraums mündet. Über die Fluidleitung ist ein Luft- oder Sauerstoffstrom in den Innenraum einleitbar. Durch das zusätzliche Einleiten von Luft oder Sauerstoff in den Innenraum ist die Umwandlung bzw. der Abbau der organischen Stoffe auf besonders effektive Weise möglich

In einem bevorzugten Ausführungsbeispiel der Erfindung ist vorgesehen, dass das Verhältnis zwischen Füllvolumen des Beckens und Schüttvolumen des porösen Materials zwischen 4:1 und 7:1 beträgt, vorzugsweise 6,25:1. Ein derartiges Verhältnis hat sich als besonders vorteilhaft herausgestellt. Unter Schüttvolumen wird nach gängiger Definition das Volumen der einzelnen Partikels des Füllmaterials sowie das Volumen eines die Hohlräume der Partikel einnehmenden Fluids verstanden. Das Schüttvolumen schließt somit Zwischenräume, Hohlräume und ggfs. Hautwerksporen des Füllmaterials ein.

Vorzugsweise ist vorgesehen, dass das Volumenverhältnis zwischen dem Einfüllbereich und dem Hauptbereich des Beckens zwischen 1:1 und 1,5:1 beträgt. Ein derartiges Verhältnis hat sich für den Abbau der organischen Abfälle als besonders vorteilhaft erwiesen. Durch den mindestens genauso großen Einfüllbereich wie Hauptbereich des Beckens wird gewährleistet, dass die Suspension in vorteilhafter Weise bereitgestellt werden kann und ein ausreichender Puffer an neu hergestellter Suspension vorliegt. Ferner wird erreicht, dass die Suspension in dem Einfüllbereich eine relativ lange Verweilzeit hat, bevor sie in den Hauptbereich gelangt, so dass die organischen Abfälle sich in der Flüssigkeit weiter zersetzen können.

In einem bevorzugten Ausführungsbeispiel der Erfindung ist vorgesehen, dass die Suspension bei der Herstellung in dem Einfüllbereich einen Volumenanteil von 10-80 % organische Abfälle aufweist. Vorzugsweise weist die Suspension einen Volumenanteil von mindestens 20 % organische Abfälle auf. Die organischen Abfälle können in fester sowie flüssiger Form vorliegen. Die Siebvorrichtung kann Öffnungen mit einer Öffnungsweite zwischen 10 mm und 50 mm aufweisen. Dabei beträgt vorzugsweise die offene Oberfläche mindestens 50 % der Gesamtoberfläche der Siebvorrichtung.

In dem Becken kann eine Umwälzpumpe angeordnet sein. Die Umwälzpumpe kann beispielsweise eine Strömung in dem Einfüllbereich oder in dem Hauptbereich hervorrufen. Dadurch kann eine vorteilhafte Vermengung der Suspension in dem Einfüllbereich erreicht werden. Ferner können durch die Umwälzpumpe gezielt Strömungen im Hauptbereich erzeugt werden, so dass das aus dem Hauptbereich zu entnehmende Düngemittel eine gleichbleibende Konzentration an Nitraten aufweist.

Als Düngemittel wird im Rahmen der Erfindung auch ein Düngemittelkonzentrat verstanden, das als Ausgangsstoff für die Herstellung von Dünger verwendet werden kann.

Die vorliegende Erfindung sieht ferner ein Verfahren zur Düngemittelherstellung aus organischen Abfällen vor. Das Verfahren nutzt vorzugsweise die erfindungsgemäße Anlage zur Düngemittelherstellung.

Das erfindungsgemäße Verfahren weist folgende Schritte auf:
- Bereitstellen von organischen Abfällen,
- Herstellen einer Suspension aus einer Flüssigkeit und den organischen Abfällen in einem Einfüllbereich eines Beckens,
- Erzeugen eines Kreislaufs der Suspension, bei der die Suspension aus dem Becken entnommen wird, in einen oberen Bereich eines langgestreckten Innenraums, der mit porösem Füllmaterial gefüllt ist, eingeleitet wird, wobei die Suspension nach dem Einleiten durch das poröse Füllmaterial fließt, und dem Becken wieder zugeführt wird,
- während des Kreislaufs der Suspension: Nitratherstellung durch Umwandlung organischer Bestandteile der organischen Abfällen mittels an dem porösen Füllmaterial angeordneter Mikroorganismen,
- Entnahme von Düngemittel in Form von nitrathaltiger Flüssigkeit aus dem Becken.

Das erfindungsgemäße Verfahren ermöglicht somit in vorteilhafter Weise die Umwandlung von organischen Abfällen in eine nitrathaltige Flüssigkeit, die als Düngemittel verwertet werden kann.

Bei dem erfindungsgemäßen Verfahren werden vorzugsweise zerkleinerte bzw. kleingeriebene organische Abfälle verwendet. Die organischen Abfälle werden für die Herstellung der Suspension somit "gemust". Vorzugsweise ist bei dem erfindungsgemäßen Verfahren vorgesehen, dass die Suspension nach der Herstellung in dem Einfüllbereich des Beckens durch eine Siebvorrichtung in einen Hauptbereich des Beckens eingeleitet wird, wobei während des Kreislaufs der Suspension eine Entnahme aus dem Hauptbereich des Beckens erfolgt.

Dadurch werden größere Teile des zerkleinerten organischen Abfalls zurückgehalten und ferner wird ein gleichmäßiger Zulauf von Suspension in den Hauptbereich des Beckens gewährleistet.

Der Einfüllbereich des Beckens kann den Hauptbereich des Beckens ringförmig umgeben, wobei in dem Einfüllbereich eine Ringströmung der Suspension erzeugt wird. Dadurch ist eine vorteilhafte Durchmischung der Suspension möglich, so dass in den Hauptbereich Suspension mit einer annähernd gleichbleibenden Konzentration von organischen Abfällen erfolgt.

Es kann vorgesehen sein, dass eine kontinuierliche Herstellung von Suspension erfolgt und kontinuierlich Düngemittel entnommen wird. Selbstverständlich ist es auch möglich, dass das Verfahren chargenweise durchgeführt wird, so dass eine bestimmte Menge von Suspension hergestellt und nach einem ausreichend langen Zeitraum das Düngemittel entnommen werden kann.

Die Suspension kann bei der Herstellung einen Volumenanteil zwischen 10 und 40 % organische Abfälle aufweisen.

Bei dem erfindungsgemäßen Verfahren kann ferner vorgesehen sein, dass die Suspension in dem Becken umgewälzt wird.

Im Folgenden wird unter die Bezugnahme auf die Figuren die erfindungsgemäße Anlage bzw. das erfindungsgemäße Verfahren näher erläutert. Es zeigen:
- Fig. 1: eine schematische Draufsicht auf eine erfindungsgemäße Anlage und
- Fig. 2: eine schematische Schnittdarstellung der erfindungsgemäßen Anlage der Fig. 1.

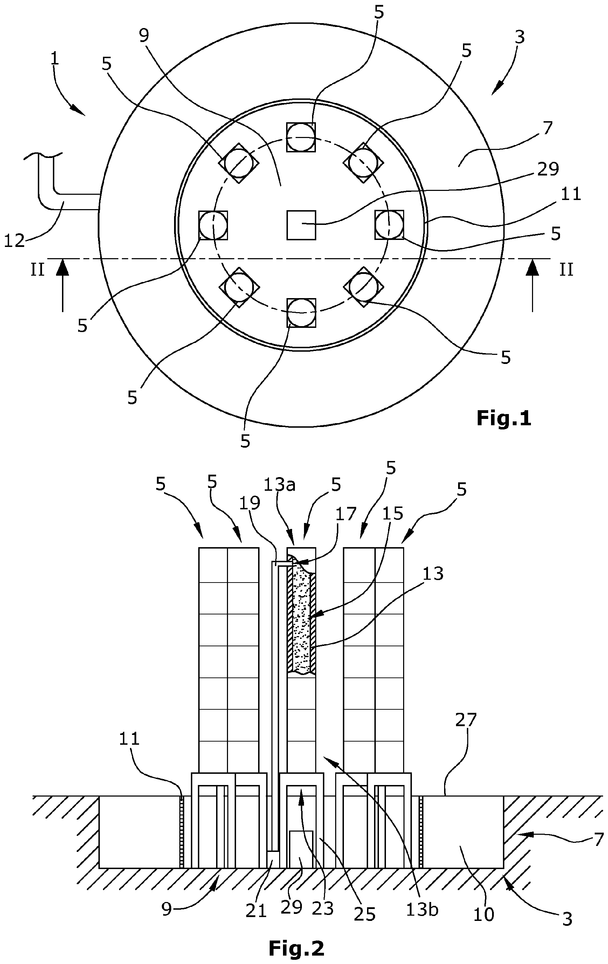

In Fig. 1 ist die erfindungsgemäße Anlage 1 zur Düngemittelherstellung aus organischen Abfällen schematisch in einer Draufsicht dargestellt.

Die erfindungsgemäße Anlage 1 weist ein Becken 3 und mehrere Säulen 5 auf.

Das Becken 3 ist in einen Einfüllbereich 7 und einen Hauptbereich 9 aufgeteilt. Der Einfüllbereich 7 und der Hauptbereich 9 sind durch eine Siebvorrichtung 11 getrennt. In dem Einfüllbereich 7 ist eine Suspension 10 aus einer Flüssigkeit und zerkleinerten organischen Abfällen bereitstellbar. Die organischen Abfälle und/oder die Flüssigkeit können über eine separate Zuleitung 12 dem Einfüllbereich zugeführt werden. Selbstverständlich ist es auch möglich, dass über separate Zuleitungen Flüssigkeit und organische Abfälle dem Einfüllbereich 7 getrennt zugeführt werden, so dass die Suspension 10 erst in dem Einfüllbereich 7 hergestellt wird.

Aus dem Einfüllbereich 7 gelangt die Suspension 10 mit den organischen Abfällen durch die Siebvorrichtung 11 in den Hauptbereich 9 des Beckens 3. In dem Hauptbereich 9 des Beckens 3 sind die Säulen 5 angeordnet.

Wie am besten aus Fig. 2 ersichtlich ist, weisen die Säulen 5 einen langgestreckten Innenraum 13 auf, in dem poröses Füllmaterial 15 angeordnet ist. In einem oberen Endbereich 13a des langgestreckten Innenraums 13 ist eine Einlassöffnung 17 angeordnet, über die Suspension 10 aus dem Hauptbereich 9 des Beckens 3 in den langgestreckten Innenraum 13 eingeleitet werden kann. Dazu ist eine Flüssigkeitsleitung 19 vorgesehen, die den Hauptbereich 9 des Beckens 3 mit der Einlassöffnung 17 verbindet.

Die Flüssigkeitsleitung 19 ist mit einer Pumpe 21 verbunden, die die Suspension aus dem Hauptbereich 9 des Beckens 3 zu der Einlassöffnung 17 pumpt.

Die durch die Einlassöffnung 17 in den Innenraum 13 eingelassene Suspension fließt durch das poröse Füllmaterial 15 zu einem unteren Endbereich 13b des Innenraums 13. Dieser weist mindestens eine Auslassöffnung 23 auf, durch die die Suspension 10 zurück in den Hauptbereich 9 des Beckens 3 gelangen kann. Die Suspension 10 kann somit in einem Kreislauf durch den Innenraum 13 befördert werden.

An den Oberflächen des porösen Füllmaterials 15 sind Mikroorganismen angesiedelt, die die mittels der Suspension zu dem porösen Füllmaterial transportierten organischen Abfälle abbaut, in dem diese von den Mikroorganismen in Nitrate umgewandelt werden. Die umgewandelten Nitrate werden von der nachfließenden Suspension 10 aufgenommen und in den Hauptbereich 9 des Beckens 3 transportiert.

Der Abbau der organischen Abfälle erfolgt weitestgehend aerob. In dem porösen Füllmaterial 15 entstehen lediglich kleine Mikroklimazonen, die einen anaeroben Abbau ermöglichen. Dadurch können Bestandteile des organischen Abfalls, die mittels eines aeroben Abbaus nicht abgebaut werden können, ebenfalls umgewandelt werden.

Wie aus Fig. 2 ersichtlich ist, sind die Säulen 5 mittels eines Ständers 25 aufgeständert, so dass sich die Auslassöffnung 23 des langgestreckten Innenraums 13 oberhalb des Spiegels 27 der Suspension 10 befindet. Dadurch wird verhindert, dass in dem unteren Endbereich 13b des langgestreckten Innenraums 13 große anaerobe Zonen entstehen, da Luft durch die Auslassöffnungen in den Innenraum 13 gelangen kann.

Durch den weitestgehend aeroben Abbau in der erfindungsgemäßen Anlage 1 entsteht in der Umgebung nahezu keine große Geruchsbelastung.

Wie aus Fig. 1 ersichtlich ist, umgibt der Einfüllbereich 7 den Hauptbereich 9 des Beckens 3 kreisringförmig. In dem Einfüllbereich 7 wird mittels einer nicht dargestellten Umwälzpumpe eine Kreisströmung erzeugt, so dass die in den Einfüllbereich 7 eingegebenen organischen Abfälle zunächst für einen gewissen Zeitraum in dem Einfüllbereich 7 verbleiben und in der Flüssigkeit weiter zersetzt werden. Anschließend gelangt die Suspension durch die Siebvorrichtung 11 in den Hauptbereich 9. Die Säulen 5 sind auf einem virtuellen Kreis angeordnet und weisen somit einen gleichmäßigen Abstand zu der Siebvorrichtung 11 auf. Dadurch wird gewährleistet, dass die in die Säulen 5 eingelassene Suspension 10 bei allen Säulen 5 annähernd die gleiche Konzentration an organischen Abfällen aufweist.

Mittig in dem Hauptbereich 9 des Beckens 3 ist eine Auslassvorrichtung 29 vorhanden, mittels der nitrathaltige Flüssigkeit als Düngemittel entnommen werden kann. Durch die mittige Anordnung der Auslassvorrichtung 29 weist diese einen gleichmäßigen Abstand zu allen Säulen 5 auf, so dass eine ausreichende Durchmischung der alle Säulen 5 verlassenen Flüssigkeiten mit Nitraten erfolgt und die durch die Auslassvorrichtung 29 entnommene Flüssigkeit annähernd einen konstanten Nitratgehalt aufweist.

Das poröse Füllmaterial 15 kann beispielsweise Vulkangestein und/oder ein Tonmineral sein und als Schüttgut vorliegen.

Es kann vorgesehen sein, dass mittels einer nicht dargestellten Fluidleitung Luft oder Sauerstoff in den unteren Endbereich des Innenraums 13 eingeleitet wird.

Dadurch kann der Abbau der organischen Abfälle durch die Mikroorganismen aufgrund des zusätzlichen Sauerstoffs verbessert werden.

Das Verhältnis zwischen dem Füllvolumen des Beckens 3 und des Schüttvolumens des porösen Füllmaterials 15 kann beispielsweise 6,25:1 betragen. Das Volumenverhältnis zwischen dem Einfüllbereich 7 und dem Hauptbereich 9 des Beckens 3 beträgt vorzugsweise 1:1,5.

Die erfindungsgemäße Anlage 1 kann insbesondere zum Ammoniakabbau in der chemischen Industrie, zur Abfallbeseitigung in Kommunen aber auch zur Verwertung von organischen Abfällen aus dem Agrar- und Pflanzenbausektor verwendet werden.

## Patentansprüche

1. Anlage (1) zur Düngemittelherstellung aus organischen Abfällen mit mindestens einer Säule (5) mit einem langgestreckten Innenraum (13),
wobei der langgestreckte Innenraum (13) an einem oberen Endbereich (13a) mindestens eine Einlassöffnung (17) zum Einlass einer Suspension (10) aus einer Flüssigkeit und organischen Abfällen und an einem unteren Endbereich (13b) mindestens eine Auslassöffnung (23) für die Suspension (10) aufweist, wobei in dem langgestreckten Raum (13) poröses Füllmaterial (15) angeordnet ist,
und mit einem Becken (3) zur Aufnahme der Suspension (10),
wobei das Becken (3) mit der Einlassöffnung (17) und der Auslassöffnung (23) des Innenraums (13) in Verbindung steht und die Suspension (10) von dem Becken (3) im Kreislauf durch die Einlassöffnung (17) in den Innenraum (13) befördert wird und aus der Auslassöffnung (23) zurück in das Becken (3) gelangt,
wobei das Becken (3) einen Einfüllbereich (7) aufweist, in dem die Suspension (10) bereitstellbar ist und wobei der Hauptbereich (9) des Beckens (3) eine Auslasseinrichtung (29) zur Entnahme des fertiggestellten Düngemittels aufweist.

2. Anlage nach Anspruch 1, **dadurch gekennzeichnet, dass** der Einfüllbereich (7) von einem Hauptbereich (9) des Beckens (3) über eine Siebvorrichtung (11) getrennt ist, wobei Hauptbereich (9) des Beckens (3) mit der Einlassöffnung (17) und der Auslassöffnung (23) des Innenraums (13) in Verbindung steht, wobei vorzugsweise der Einfüllbereich (7) den Hauptbereich (9) umschließt.

3. Anlage nach Anspruch 1 oder 2, **dadurch gekennzeichnet, dass** die Auslassöffnung (23) des Innenraums (13) oberhalb des Spiegels (27) der Suspension (10) angeordnet ist.

4. Anlage nach Anspruch 2 oder 3, **gekennzeichnet durch** mehrere Säulen (5), wobei alle Säulen (5) in einem gleichmäßigen Abstand zu der Siebvorrichtung (11) angeordnet sind, wobei vorzugsweise die Auslasseinrichtung (29) im gleichen Abstand zu allen Säulen (5) angeordnet ist.

5. Anlage nach einem der Ansprüche 1 bis 4, **dadurch gekennzeichnet, dass** das poröse Füllmaterial (15) mineralisch ist.

6. Anlage nach einem der Ansprüche 1 bis 5, **dadurch gekennzeichnet**, das Verhältnis zwischen Füllvolumen des Beckens (3) und Schüttvolumen des porösen Füllmaterials (15) zwischen 4:1 und 7:1 beträgt und dass das Volumenverhältnis zwischen Einfüllbereich (7) und Hauptbereich (9) des Beckens (3) zwischen 1:1 und 1,5:1 beträgt.

7. Anlage nach einem der Ansprüche 1 bis 6, **dadurch gekennzeichnet, dass** die Suspension (10) bei der Herstellung in dem Einfüllbereich einen Volumenanteil von 10-80 % organische Abfälle aufweist.

8. Anlage nach einem der Ansprüche 2 bis 7, **dadurch gekennzeichnet, dass** die Siebvorrichtung (11) Öffnungen mit einer Öffnungsweite zwischen 10mm und 50mm aufweist.

9. Anlage nach einem der Ansprüche 1 bis 8, **dadurch gekennzeichnet, dass** in dem Becken (3) eine Umwälzpumpe angeordnet ist.

10. Verfahren zur Düngemittelherstellung aus organischen Abfällen mit folgenden Schritten:
- Bereitstellen von organischen Abfällen,
- Herstellen einer Suspension (10) aus einer Flüssigkeit und den organischen Abfällen in einem Einfüllbereich (7) eines Beckens (3),
- Erzeugen eines Kreislaufs der Suspension (10), bei der die Suspension aus dem Becken (3) entnommen wird, in einen oberen Bereich (13a) eines langgestreckten Innenraums (13), der mit porösem Füllmaterial (15) gefüllt ist, eingeleitet wird, wobei die Suspension (10) nach dem Einleiten durch das poröse Füllmaterial (15) fließt, und dem Becken (3) wieder zugeführt wird,
- während des Kreislaufs der Suspension (10): Nitratherstellung durch Umwandlung organischer Bestandteile der organischen Abfällen mittels an dem porösen Füllmaterial (15) angeordneter Mikroorganismen,
- Entnahme von Düngemittel in Form von nitrathaltiger Flüssigkeit aus dem Becken (3).

11. Verfahren nach Anspruch 10, **dadurch gekennzeichnet, dass** die Suspension (10) nach der Herstellung in dem Einfüllbereich (7) des Beckens (3) durch eine Siebvorrichtung (11) in einen Hauptbereich (9) des Beckens (3) eingeleitet wird, wobei während des Kreislaufs der Suspension (10) eine Entnahme aus dem Hauptbereich (9) des Beckens (3) erfolgt.

12. Verfahren nach Anspruch 10 oder 11, **dadurch gekennzeichnet**, der Einfüllbereich (7) den Hauptbereich (9) des Beckens (3) ringförmig umgibt, wobei in dem Einfüllbereich (7) eine Ringströmung der Suspension (10) erzeugt wird.

13. Verfahren nach einem der Ansprüche 10 bis 12, **dadurch gekennzeichnet, dass** eine kontinuierliche Herstellung der Suspension (10) erfolgt und kontinuierlich Düngemittel entnommen wird.

14. Verfahren nach einem der Ansprüche 10 bis 13, **dadurch gekennzeichnet, dass** die Suspension (10) bei der Herstellung einen Volumenanteil von 10-80 % organische Abfälle aufweist.

15. Verwendung einer Anlage (1)
mit mindestens einer Säule (5) mit einem langgestreckten Innenraum (13),
wobei der langgestreckte Innenraum (13) an einem oberen Endbereich (13a) mindestens eine Einlassöffnung (17) zum Einlass einer Suspension (10) aus einer Flüssigkeit und organischen Abfällen und an einem unteren Endbereich (13b) mindestens eine Auslassöffnung (23) für die Suspension (10) aufweist, wobei in dem langgestreckten Raum (13) poröses Füllmaterial (15) angeordnet ist,
und mit einem Becken (3) zur Aufnahme der Suspension (10),
wobei das Becken (3) mit der Einlassöffnung (17) und der Auslassöffnung (23) des Innenraums (13) in Verbindung steht und die Suspension (10) von dem Becken (3) im Kreislauf durch die Einlassöffnung (17) in den Innenraum (13) befördert wird und aus der Auslassöffnung (23) zurück in das Becken (3) gelangt, und
wobei das Becken (3) einen Einfüllbereich (7) aufweist, in dem die Suspension (10) bereitstellbar ist,
zur Düngemittelherstellung aus organischen Abfällen.

## Claims

1. System (1) for the production of fertilizer from organic waste
comprising at least one column (5) with an elongated inner space (13),
wherein, in an upper end region (13a), the elongated inner space (13) has at least one inlet opening (17) for the inlet of a suspension (10) of a liquid and organic waste and, in a lower end region (13b), has at least one outlet opening (23) for the suspension (10), wherein porous filler material (15) is provided in the elongated inner space (13),
and comprising a basin (3) for receiving the suspension (10),
wherein the basin (3) is in communication with the inlet opening (17) and the outlet opening (23) of the inner space (13), and the suspension (10) is conveyed in circulation from the basin (3) through the inlet opening (17) into the inner space (13) and returns back into the basin (3) from the outlet opening (23),
wherein the basin (3) comprises a filling portion (7) in which the suspension (10) can be provided and wherein the main portion (9) of the basin (3) comprises an outlet means (29) for withdrawing the finished fertilizer therefrom.

2. System of claim 1, **characterized in that** the filling portion (7) is separated from the main portion (9) of the basin (3) by means of a screen device (11), wherein the main portion (9) of the basin (3) is in communication with the inlet opening (17) and the outlet opening (23) of the inner space (13), wherein the inlet portion (7) preferably encloses the main portion (9).

3. System of claim 1 or 2, **characterized in that** the outlet opening (23) of the inner space (13) is arranged above the level (27) of the suspension (10).

4. System of claim 2 or 3, **characterized by** a plurality of columns (5), wherein all columns (5) are arranged in a regular distance from the screen device (11), wherein the outlet means (29) is preferably arranged with the same distance to all columns (5).

5. System of one of claims 1 to 4, **characterized in that** the porous filling material (15) is a mineral material.

6. System of one of claims 1 to 5, **characterized in that** the ratio between the filling volume of the basin (3) and the bulk volume of the porous filling material (15) is between 4:1 and 7:1, and that the volume ratio between the filling portion (7) and the main portion (9) of the basin (3) is between 1:1 and 1.5:1.

7. System of one of claims 1 to 6, **characterized in that**, during production, the suspension (10) has a volume proportion of 10-80% of organic waste in the filling portion.

8. System of one of claims 2 to 7, **characterized in that** the screen device (11) comprises openings having an opening width between 10mm and 50mm.

9. System of one of claims 1 to 8, **characterized in that** a circulation pump is arranged in the basin (3).

10. Method for the production of fertilizer from organic waste, the method comprising the following steps:
- providing organic waste,
- producing a suspension (10) of a liquid and the organic waste in a filling portion (7) of a basin (3),
- causing a circulation of the suspension (10), in which the suspension is withdrawn from the basin (3), is introduced into an upper region (13a) of an elongated inner space (13) filled with a porous filling material (15), wherein after the introduction the suspension (10) flows through the porous filler material (15), and is returned to the basin (3),
- during the circulation of the suspension (10): production of nitrate by converting organic components of the organic waste by means of microorganisms provided on the porous filler material (15),
- withdrawing fertilizer in the form of nitrate-containing liquid from the basin (3).

11. Method of claim 10, **characterized in that** after production in the filling portion (7) of the basin (3), the suspension (10) is introduced into a main portion (9) of the basin (3) via a screen device (11), wherein a withdrawal from the main portion (9) of the basin (3) is performed during the circulation of the suspension (10)

12. Method of claim 10 or 11, **characterized in that** the filling portion (7) annularly surrounds the main portion (9) of the basin (3), wherein an annular flow of the suspension (10) is generated in the filling portion (7).

13. Method of one of claims 10 to 12, **characterized in that** a continuous production of the suspension (10) is performed and fertilizer is continuously withdrawn.

14. Method of one of claims 11 to 13, **characterized in that**, during production, the suspension (10) has a volume fraction of 10-80% of organic waste.

15. Use of a system (1)
comprising at least one column (5) with an elongated inner space (13), wherein, in an upper end region (13a), the elongated inner space (13) has at least one inlet opening (17) for the inlet of a suspension (10) of a liquid and organic waste and, in a lower end region (13b), has at least one outlet opening (23) for the suspension (10), wherein porous filler material (15) is provided in the elongated inner space (13),
and comprising a basin (3) for receiving the suspension (10),
wherein the basin (3) is in communication with the inlet opening (17) and the outlet opening (23) of the inner space (13), and the suspension (10) is conveyed in circulation from the basin (3) through the inlet opening (17) into the inner space (13) and returns back into the basin (3) from the outlet opening (23),
wherein the basin (3) comprises a filling portion (7) in which the suspension (10) can be provided,
for the production of fertilizer from organic waste.

## Revendications

1. Installation (1) destinée à la production d'engrais à partir de déchets organiques
dotée d'au moins une colonne (5) avec un espace intérieur allongé (13),
dans laquelle l'espace intérieur allongé (13) comporte au moins une ouverture d'entrée (17) à une zone d'extrémité haute (13a) permettant l'entrée d'une suspension (10) composée d'un liquide et de déchets organiques et au moins une ouverture de sortie (23) à une zone d'extrémité basse (13b) pour la suspension (10), dans laquelle un matériau de remplissage poreux (15) est disposé dans l'espace intérieur allongé (13),
et dotée d'un bassin (3) pour recueillir la suspension (10), dans laquelle le bassin (3) est raccordé à l'ouverture d'entrée (17) et à l'ouverture de sortie (23) de l'espace intérieur (13) et la suspension (10) est mise en circulation du bassin (3) à l'espace intérieur (13) par l'ouverture d'entrée (17) et retourne dans le bassin (3) depuis l'ouverture de sortie (23),
dans laquelle le bassin (3) comporte une zone de remplissage (7), la suspension (10) pouvant être préparée dans celle-ci et dans laquelle la zone principale (9) du bassin (3) comporte un moyen de sortie (29) pour le prélèvement de l'engrais fini.

2. Installation selon la revendication 1, **caractérisée en ce que** la zone de remplissage (7) est séparée d'une zone principale (9) du bassin (3) par le biais d'un dispositif de tamis (11), dans laquelle la zone principale (9) du bassin (3) est raccordée à l'ouverture d'entrée (17) et à l'ouverture de sortie (23) de l'espace intérieur (13), dans laquelle la zone de remplissage (7) entoure de préférence la zone principale (9).

3. Installation selon la revendication 1 ou 2, **caractérisée en ce que** l'ouverture de sortie (23) de l'espace intérieur (13) est agencée au-dessus du niveau (27) de la suspension (10).

4. Installation selon la revendication 2 ou 3, **caractérisée par** plusieurs colonnes (5), dans laquelle toutes les colonnes (5) sont disposées à une distance uniforme du dispositif de tamis (11), dans laquelle le moyen de sortie (29) est de préférence disposé à la même distance de toutes les colonnes (5).

5. Installation selon l'une des revendications 1 à 4, **caractérisée en ce que** le matériau de remplissage poreux (15) est minéral.

6. Installation selon l'une des revendications 1 à 5, **caractérisée en ce que** le rapport entre le volume de remplissage du bassin (3) et le volume apparent du matériau de remplissage poreux (15) se trouve entre 4:1 et 7:1 et **en ce que** le rapport volumique entre la zone de remplissage (7) et la zone principale (9) du bassin (3) se trouve entre 1:1 et 1,5:1.

7. Installation selon l'une des revendications 1 à 6, **caractérisée en ce que** la suspension (10) présente lors de la production dans la zone de remplissage une fraction volumique de déchets organiques de 10-80 %.

8. Installation selon l'une des revendications 2 à 7, **caractérisée en ce que** le dispositif de tamis (11) comporte des ouvertures dotées d'une largeur d'ouverture entre 10mm et 50mm.

9. Installation selon l'une des revendications 1 à 8, **caractérisée en ce qu'**une pompe de recirculation est agencée dans le bassin (3).

10. Procédé destiné à la production d'engrais à partir de déchets organiques avec les étapes suivantes :
- fourniture de déchets organiques,
- production d'une suspension (10) composée d'un liquide et des déchets organiques dans une zone de remplissage (7) d'un bassin (3),
- génération d'une circulation de la suspension (10), dans laquelle la suspension est prélevée dans le bassin (3), est conduite dans une zone haute (13a) d'un espace intérieur allongé (13), lequel est rempli de matériau de remplissage poreux (15), dans lequel la suspension (10) s'écoule à travers le matériau de remplissage poreux (15) après avoir été conduite, et est retournée au bassin (3),
- pendant la circulation de la suspension (10) : synthèse de nitrate par conversion de composants organiques des déchets organiques au moyen de microorganismes disposés sur le matériau de remplissage poreux (15),
- prélèvement de l'engrais dans le bassin (3) sous forme de liquide nitraté.

11. Procédé selon la revendication 10, **caractérisé en ce que** la suspension (10), après la production dans la zone de remplissage (7) du bassin (3), est guidée au travers du dispositif de tamis (11) dans une zone principale (9) du bassin (3), dans lequel pendant la circulation de la suspension (10) un prélèvement s'effectue hors de la zone principale (9) du bassin (3).

12. Procédé selon la revendication 10 ou 11, **caractérisé en ce que** la zone de remplissage (7) entoure la zone principale (9) du bassin (3) de manière annulaire, dans lequel un courant annulaire de la suspension (10) est généré dans la zone de remplissage (7).

13. Procédé selon l'une des revendications 10 à 12, **caractérisé en ce qu'**une production continue de la suspension (10) s'effectue et l'engrais est prélevé en continu.

14. Procédé selon l'une des revendications 10 à 13, **caractérisé en ce que** la suspension (10) présente lors de la production une fraction volumique de déchets organiques de 10-80 %.

15. Utilisation d'une installation (1)
dotée d'au moins une colonne (5) avec un espace intérieur allongé (13),
dans laquelle l'espace intérieur allongé (13) comporte à une extrémité haute (13a) au moins une ouverture d'entrée (17) permettant l'entrée d'une suspension (10) composée d'un liquide et de déchets organiques et à une extrémité basse (13b) au moins une ouverture de sortie (23) pour la suspension (10), dans laquelle un matériau de remplissage poreux (15) est disposé dans l'espace intérieur allongé (13),
et dotée d'un bassin (3) permettant de recueillir la suspension (10)
dans laquelle le bassin (3) est raccordé à l'ouverture d'entrée (17) et à l'ouverture de sortie (23) de l'espace intérieur (13) et la suspension (10) est mise en circulation du bassin (3) à l'espace intérieur (13) par l'ouverture d'entrée (17) et retourne dans le bassin (3) depuis l'ouverture de sortie (23), et
dans laquelle le bassin (3) comporte une zone de remplissage (7), la suspension (10) pouvant être préparée dans celle-ci pour la production d'engrais à partir de déchets organiques.
